# EUROPEAN PATENT APPLICATION

(11) **EP 4 831 681 A1**
(43) Date of publication of application: **28.10.2026**
(21) Application number: 24907767.8
(22) Date of filing: 04.11.2024
(51) Int. Cl.: G01S 7/481, G01S 17/931, G01S 7/497

(54) **LIDAR MODULE AND LIDAR DEVICE**

(30) Priority: 22.12.2023 KR 20230189205; 08.10.2024 KR 20240136387
(71) Applicant: LG Innotek Co., Ltd., Seoul 07796 (KR)
(72) Inventor: KIM, Jin Young, Seoul 07796 (KR); LIM, Jun Young, Seoul 07796 (KR)
(74) Representative: DREISS Patentanwälte PartG mbB
(86) International application number: PCT/KR2024/017122
(87) International publication number: WO 2025/135482

(57) **Abstract**

The present invention provides a LiDAR module comprising: a light emitting unit for emitting light and a light receiving unit for receiving the light reflected by an object, wherein the light emitting unit includes a first short axis parallel to a first direction and a second long axis parallel to a second direction, the light receiving unit includes a second short axis parallel to the first direction and a second long axis parallel to the second direction, the light emitting unit includes a plurality of light sources arranged along the first direction, the light receiving unit includes a plurality of channels arranged along the first direction, and the first direction and the second direction are perpendicular to each other.

## Description

### [Technical Field]

The present invention relates to a LiDAR module and a LiDAR device.

### [Background Art]

A LiDAR device may be utilized in various ways via light emitted from a light source thereof.

For example, the LiDAR device may perform detection and ranging or laser imaging, detection, and ranging, and may be utilized in various ways, such as scanning by emitting millions of laser pulses per second and measuring return times or receiving light to identify a shape of a reflected object.

In order to increase efficiency of optical transmission of a LiDAR device, a case in which a size ratio between the light source of a light emitting unit and a receiving unit is different may occur, and in such a case, including a diffuser in the receiving unit or including a separate lens may cause a change in volume of an optical system.

In addition, when a field of view of a LiDAR device becomes 160 degrees or more, performance of relative illumination (RI) is significantly degraded, resulting in a problem that performance of the LiDAR device is degraded.

### [Description of Invention]

### [Technical Problem]

The present invention has been devised to solve the above-described problems of the related art and is directed to making a ratio between a receiving unit and a light emitting unit constant in a field of view of 160 degrees or more.

Problems to be solved by the present invention are not limited to those mentioned above, and other problems that have not been mentioned will be clearly understood by those skilled in the art from the following description.

### [Technical Solution]

In order to solve the aforementioned problems, according to an embodiment of the present invention, a LiDAR module includes a light emitting unit configured to emit light and a light receiving unit configured to receive the light reflected from an object, the light emitting unit includes a first short axis parallel to a first direction and a second long axis parallel to a second direction, the light receiving unit includes a second short axis parallel to the first direction and a second long axis parallel to the second direction, the light emitting unit includes a plurality of light sources arranged in the first direction, the light receiving unit includes a plurality of channels arranged in the first direction, and the first direction and the second direction are perpendicular to each other.

The light emitting unit and the light receiving unit may be spaced apart from each other in the first direction.

The light emitting unit and the light receiving unit may be aligned in the first direction.

The light emitting unit may sequentially drive the plurality of light sources in the first direction, and the light-receiving unit may sequentially drive the plurality of channels in the first direction.

A length of the light emitting unit in the second direction may be 3 to 5 times a length of the light emitting unit in the first direction.

A length of the light receiving unit in the second direction may be 3 to 5 times a length of the light receiving unit in the first direction.

The light emitting unit and the light receiving unit may be spaced apart from each other in the second direction.

The light emitting unit may include a first optical system formed by a plurality of lenses, the light receiving unit may include a second optical system formed by a plurality of lenses, and arrangements of the plurality of lenses of the first optical system and the second optical system may be at least partially identical.

The first optical system may not include a diffuser configured to diffuse the light.

A field of view of the light emitting unit may be 160 degrees or more.

The field of view of the light emitting unit may be 180 degrees or more, and a relative illumination of the light receiving unit may be 0.5 or more.

According to an embodiment of the present invention, a LiDAR device includes a first LiDAR module, a second LiDAR module, a third LiDAR module, and a fourth LiDAR module, each of the first LiDAR module, the second LiDAR module, the third LiDAR module, and the fourth LiDAR module includes a light emitting unit and a light receiving unit, the light emitting unit includes a first short axis parallel to a first direction and a second long axis parallel to a second direction, the light receiving unit includes a second short axis parallel to the first direction and a second long axis parallel to the second direction, the light emitting unit includes a plurality of light sources arranged in the first direction, the light receiving unit includes a plurality of channels arranged in the first direction, and the first direction and the second direction are perpendicular to each other.

The light emitting unit of the first LiDAR module and the light emitting unit of the second LiDAR module may overlap in the second direction, and the light emitting unit of the third LiDAR module and the light emitting unit of the fourth LiDAR module may overlap in a third direction perpendicular to the first direction and the second direction.

The light receiving unit of the first LiDAR module and the light receiving unit of the second LiDAR module may overlap in the second direction, and the light receiving unit of the third LiDAR module and the light receiving unit of the fourth LiDAR module may overlap in a third direction perpendicular to the first direction and the second direction.

### [Advantageous Effects]

A LiDAR module and a LiDAR device according to an embodiment of the present invention for solving the above-described problems can have an effect of making a ratio between a receiving unit and a light emitting unit constant in a field of view of 160 degrees or more.

Effects of the present invention are not limited to those mentioned above, and other effects that are not mentioned will be clearly understood by those skilled in the art from the description of claims.

In addition, the effects of the present invention can be described in more detail in the detailed description of the present invention and are not necessarily limited to those described above.

### [Description of Drawings]

Not only the following detailed description of exemplary embodiments of the present application but also the foregoing summary will be better understood when read in conjunction with the accompanying drawings.

For purposes of illustrating the present invention, exemplary embodiments are shown in the drawings.

However, it should be understood that the present application is not limited to the precise arrangements and instrumentalities shown.
FIG. 1 is a view for overall description of a LiDAR module according to one embodiment of the present invention;
FIG. 2 is a view of a LiDAR device according to one embodiment of the present invention for comparing the related art and the present invention;
FIG. 3 is a view for describing an arrangement relationship of a LiDAR device in a second direction according to one embodiment of the present invention;
FIG. 4 is a view for describing an arrangement relationship of a LiDAR device in a third direction according to one embodiment of the present invention;
FIG. 5 is a view for describing relative illumination of a LiDAR module according to one embodiment of the present invention; and
FIG. 6 is a view for illustrating a first optical system of a LiDAR module according to one embodiment of the present invention.

### [Modes of the Invention]

Since the present invention may be variously modified and have several embodiments, specific embodiments thereof will be illustrated in the drawings and described in detail. However, this is not intended to limit the present invention to specific embodiments, and the present invention should be understood to include all modifications, equivalents, and substitutes included in the spirit and scope of the present invention. In describing the present invention, when it is determined that detailed description of the related art may obscure the subject matter of the present invention, detailed description thereof will be omitted.

While the terms "first," "second," etc., may be used herein to describe various elements, such elements should not be limited by the terms. These terms are only used to distinguish one element from another element.

The terms used in the present application are merely provided to describe specific embodiments and are not intended to limit the present invention. The singular forms are intended to include the plural forms as well, unless the context clearly indicates otherwise. In the present application, it will be understood that terms "include," "have," or the like are intended to specify the presence of features, integers, steps, operations, elements, components, and/or combinations thereof stated in the specification, but do not preclude the possibility of the presence or addition of one or more other features, integers, steps, operations, elements, components, or combinations thereof in advance.

In addition, throughout the specification, when "connected" is used, this does not necessarily mean two or more components are directly connected, but means that two or more components are indirectly connected through another component, that the components are not only physically connected, but also electrically connected, or that the components are integrated although the components are referred to by different names depending on their locations or functions.

Further, when a component is described as being formed or disposed "on (above) or below (under)" another component, the term "on (above) or under (below)" includes not only when the two components are in direct contact with each other, but also when one or more other components are formed or disposed between the two components. Further, when a component is described as being "on (above) or below (under)," the description may include the meanings of an upward direction and a downward direction based on one component.

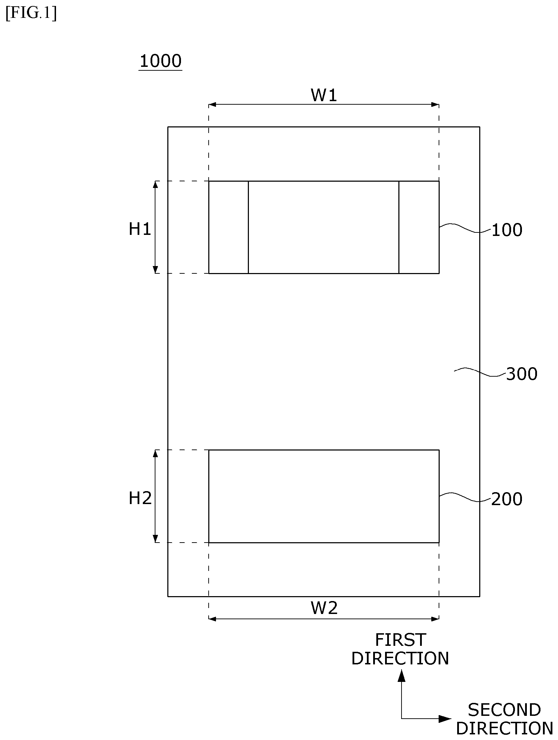

Hereinafter, exemplary embodiments of the present invention in which objects of the present invention may be specifically implemented will be described with reference to FIGS. 1 to 6.

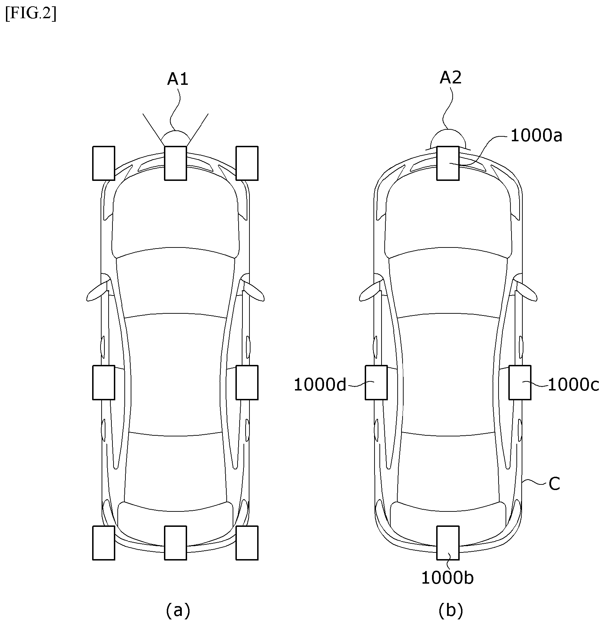

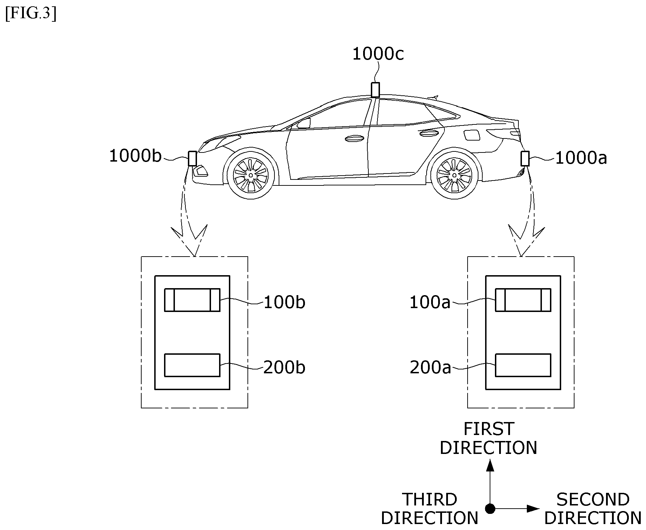

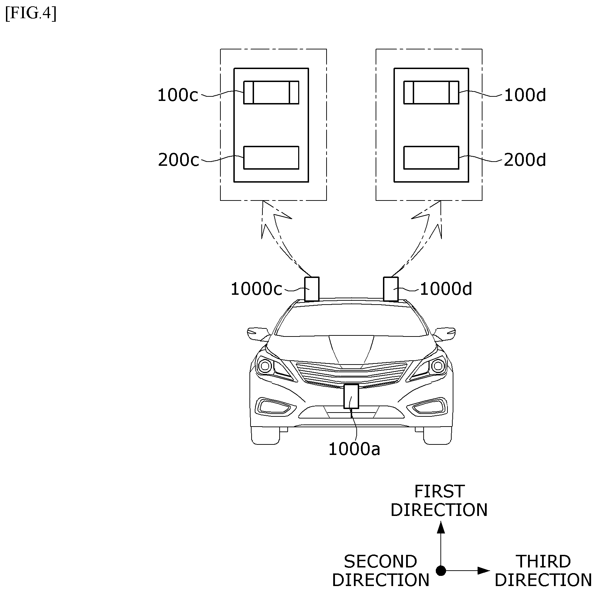

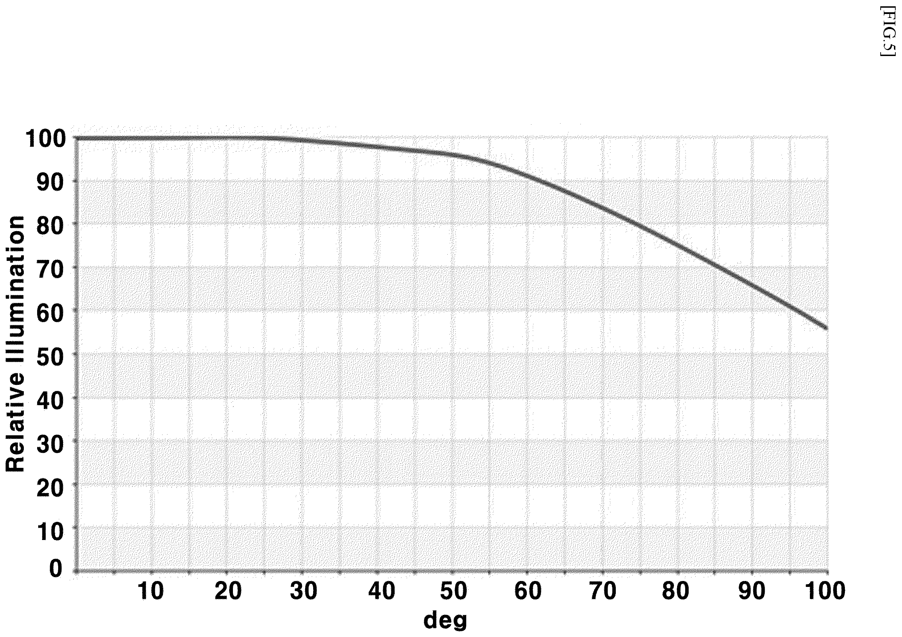

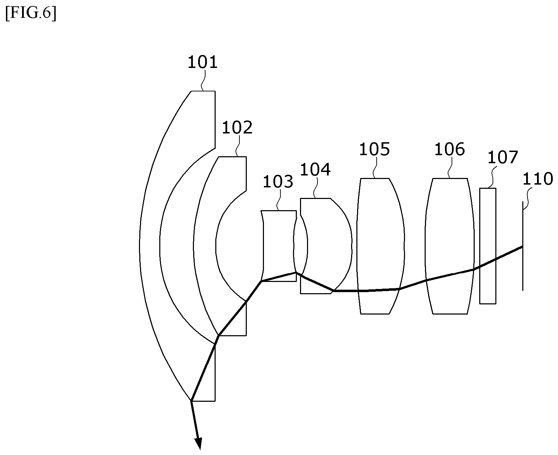

Specifically, FIG. 1 is a view for overall description of a LiDAR module according to one embodiment of the present invention, FIG. 2 is a view of the LiDAR device according to one embodiment of the present invention for comparing the related art and the present invention, FIG. 3 is a view for describing an arrangement relationship of the LiDAR device in a second direction device according to one embodiment of the present invention, FIG. 4 is a view for describing an arrangement relationship of the LiDAR device in a third direction according to one embodiment of the present invention, FIG. 5 is a view for describing relative illumination of the LiDAR module according to one embodiment of the present invention, and FIG. 6 is a view for illustrating a first optical system of a LiDAR module according to one embodiment of the present invention.

The LiDAR device according to an embodiment of the present invention may be a LiDAR device mounted on a vehicle to measure a distance between the vehicle and an object but is not limited thereto. The LiDAR device according to the embodiment of the present invention may extract depth information using a time of flight (ToF) principle or a phase shift principle. In the present specification, the LiDAR device may also be referred to as an information generation device, a depth information generation device, or a camera device.

Referring to FIG. 1, a LiDAR module 1000 according to the embodiment of the present invention includes a light emitting unit 100 and a light receiving unit 200. In addition, the LiDAR module 1000 may further include an information generation unit and a control unit.

The light emitting unit 100 may generate and output an output optical signal in the form of a pulse wave or in the form of a continuous wave. The continuous wave may be in the form of a sinusoid wave or a squared wave. By generating the output optical signal in the form of the pulse wave or the continuous wave, the LiDAR module 1000 may detect a time difference or a phase difference between the output optical signal output from the light emitting unit 100 and an input optical signal reflected from a target area and then input to the light receiving unit 200.

In the present specification, "output light" may refer to light output from the light emitting unit 100 and incident on an object, and "input light" may refer to light reflected from a target area and input on the light receiving unit 200, after being output from the light emitting unit 100 and reaching the target area. From the viewpoint of the target area, the output light may be incident light, and the input light may be reflected light. In the present specification, the target area may be used interchangeably with an object or a target.

The light emitting unit 100 includes a first short axis parallel to a first direction and a first long axis parallel to a second direction. In addition, the light emitting unit 100 includes a plurality of light sources 110 for emitting light, and the plurality of light sources 110 each have a third short axis parallel to the first direction and a third long axis parallel to the second direction and may be arranged side by side in the first direction. That is, the plurality of light sources 110 are arranged in the first direction such that the third short axis may form the first short axis. However, this is only one embodiment, and the third short axis and the third long axis of the plurality of light sources 110 may be different from the above-mentioned directions and are not necessarily limited to those described above.

In addition, the plurality of light sources 110 are arranged to have the first short axis in the first direction, and the plurality of light sources 110 may be sequentially driven in the first direction to emit light.

In this case, the light emitting unit 100 may have a length of a first width W1 in the second direction and may have a length of a first height H1 in the first direction. Here, the length of the length of the first width W1 may be 3 to 5 times the length of the first height H1. Preferably, the length of the first width W1 may be 3 to 4 times the length of the first height H1. More preferably, the length of the first width W1 may be 3.4 to 3.5 times the length of the first height H1.

In addition, the light emitting unit 100 may include a first optical system formed by a plurality of lenses. Here, the first optical system may not include a diffuser for diffusing light.

In addition, a field of view (FOV) of the light emitting unit 100 may be 160 degrees or more. Preferably, the FOV of the light emitting unit 100 may be 180 degrees or more, and more preferably, the FOV may be close to 190 degrees. Here, since the light emitting unit 100 has an FOV of 180 degrees or more, and preferably has an FOV close to 190 degrees, light may be emitted over a wide range even in a fixed form rather than in a rotating manner.

In this way, when the fixed form rather than the rotating manner is used, a problem of minimizing blind spots by arranging a plurality of LiDAR modules 1000 according to the FOV in the light emitting unit 100 may be solved. This will be described in more detail with reference to drawings described below.

In addition, here, the FOV may be an FOV in a horizontal direction perpendicular to the first direction based on the LiDAR module 1000 according to the embodiment of the present invention.

The light receiving unit 200 may receive an optical signal reflected from the target area. In this case, the received optical signal may be a reflection, from the target area, of the optical signal emitted by the light emitting unit 100.

The light receiving unit 200 may include the light receiving unit 200, a second optical system formed by a plurality of lenses disposed on the light receiving unit 200, and a filter. In this case, the optical signal reflected from the target area may pass through a lens group of the light receiving unit 200.

Optical axes of the plurality of lenses of the light receiving unit 200 may be aligned with an optical axis of the light receiving unit 200. The filter may be disposed on an optical path between the target area and the light receiving unit 200. The filter may filter light having a predetermined wavelength range. The filter may transmit light of a specific wavelength.

For example, the filter may transmit light in an infrared or near-infrared band and block light other than the infrared or near-infrared band.

The light receiving unit 200 may receive an optical signal and output the received optical signal as an electrical signal. The light receiving unit 200 may detect light having a wavelength corresponding to a wavelength of light output from the light emitting unit 100. For example, the light receiving unit 200 may detect light in an infrared or near-infrared band.

The light receiving unit 200 may be configured in a structure in which a plurality of pixels are arranged in a grid form.

In addition, the light receiving unit 200 includes a second short axis parallel to the first direction and a second long axis parallel to the second direction. In addition, the light receiving unit 200 includes a plurality of channels for receiving light, and the plurality of channels each have a fourth short axis parallel to the first direction and a fourth long axis parallel to the second direction and may be arranged side by side in the first direction. That is, the plurality of channels are arranged in the first direction such that the fourth short axis may form the second short axis. However, this is only one embodiment, and the third short axis and the third long axis of the plurality of light sources 110 may be different from the above-mentioned directions and are not necessarily limited to those described above.

In addition, the plurality of channels are arranged to have the fourth short axis parallel to the first direction, and the plurality of channels may be sequentially driven in the first direction to emit light.

In this case, the light receiving unit 200 may have a length of a second width W2 in the second direction and may have a length of a second height H2 in the first direction. Here, the length of the length of the second width W2 may be 3 to 5 times the length of the second height H2. Preferably, the length of the second width W2 may be 3 to 4 times the length of the second height H2. More preferably, the length of the second width W2 may be 3.4 to 3.5 times the length of the second height H2.

Meanwhile, the light emitting unit 100 and the light receiving unit 200 may be arranged side by side in the first direction on one board 300. For example, the board 300 according to the embodiment of the present invention may be a printed circuit board (PCB). Alternatively, the light emitting unit 100 and the light receiving unit 200 may be disposed to be aligned with each other in the first direction within the LiDAR module 1000, and the light emitting unit 100 and the light receiving unit 200 may be disposed on different boards 300. A relationship in which the light emitting unit 100 and the light receiving unit 200 are disposed on the board 300 may not necessarily be limited to that described above.

However, the light emitting unit 100 and the light receiving unit 200 according to the embodiment of the present invention are aligned in the first direction, and alternatively, the light emitting unit 100 and the light receiving unit 200 may be disposed to at least partially overlap each other in the first direction, and depending on a design, may also be disposed to be at least partially aligned or overlapped in the second direction.

In addition, the plurality of light sources 110 of the light emitting unit 100 may be sequentially driven in the first direction, the plurality of channels of the light receiving unit 200 may be sequentially driven in the first direction, and the plurality of light sources 110 and the plurality of channels may be matched with each other in a one-to-one manner.

For example, one of the plurality of light sources 110 operating at a first time may be defined as a first light source 110, another of the plurality of light sources 110 operating at a second time may be defined as a second light source 110, the first time may be earlier than the second time, and the first light source 110 and the second light source 110 may be disposed side by side. Correspondingly, when one of the plurality of channels is defined as a first channel and another of the plurality of channels is defined as a second channel, output light of the first light source 110 at the first time may be incident on the first channel, and output light of the second light source 110 may be incident on the second channel.

That is, as the plurality of light sources 110 are disposed in the first direction, the plurality of channels are correspondingly disposed in the first direction to be sequentially matched and operated over time.

Meanwhile, although not illustrated, the information generation unit generates information on the target area using the input optical signal input to the light receiving unit 200. The information about the target area may include three-dimensional information about the target area.

For example, the information on the target area may include depth information on the target area or shape information on the target area. For example, the information generation unit may calculate depth information about an object using a time taken for the output optical signal output from the light emitting unit 100 to be reflected from the object and then input to the light receiving unit 200.

Alternatively, the information generation unit may calculate a time difference between an output optical signal and an input optical signal using an electrical signal received by the light receiving unit 200, and the information generation unit may calculate a distance between the target area and the LiDAR module 1000 using the calculated time difference. Alternatively, the information generation unit may calculate a phase difference between the output optical signal and the input optical signal using the electrical signal received from the light receiving unit 200, and the information generation unit may calculate the distance between the target area and the LiDAR module 1000 using the calculated phase difference.

In addition, the control unit may control driving of the light emitting unit 100, the light receiving unit 200, and the information generation unit. The information generation unit and the control unit may be implemented in the form of a PCB. Alternatively, the information generation unit and the control unit may be implemented in other forms. Alternatively, the control unit may be included in a terminal or a vehicle C according to an embodiment of the present invention.

For example, the control unit may be implemented in the form of an application processor (AP) of a smartphone equipped with the LiDAR module 1000 according to the embodiment of the present invention, or may be implemented in the form of an electronic control unit (ECU) of the vehicle C equipped with the LiDAR device according to the embodiment of the present invention.

Meanwhile, referring to FIG. 2, as illustrated in FIG. 2A, a first angle A1 corresponding to an FOV of a LiDAR module 1000 according to the related art has an FOV of about 120 degrees, output light is emitted toward the front of a camera through the FOV of 120 degrees, three LiDAR modules 1000 are disposed on a front side of the vehicle C, three LiDAR modules 1000 are disposed on a rear side of the vehicle C, and two LiDAR modules 1000 are disposed on a lateral side of the vehicle C to receive light reflected from objects. At this time, the LiDAR modules 1000 disposed at corners of the vehicle C, that is, the LiDAR modules 1000 disposed between a lateral side and a front side or between a lateral side and a rear side, are disposed such that an axis is inclined toward the lateral side by a predetermined angle rather than being disposed with an axis directed toward the front side and the rear side, and output light may be emitted to a portion of the lateral side and a portion of the front side or the rear side.

This disposition has an advantage in that objects in all directions of the vehicle C may be identified, but the number of disposed LiDAR modules 1000 is large, resulting in low economic efficiency, and since the LiDAR module 1000 has the first angle A1 close to 120 degrees as the FOV, there may also be an inconvenience in that management of the LiDAR module 1000 is relatively difficult.

However, the LiDAR device according to the embodiment of the present invention includes a first LiDAR module 1000a, a second LiDAR module 1000b, a third LiDAR module 1000c, and a fourth LiDAR module 1000d as illustrated in FIG. 2B, and the first LiDAR module 1000a and the second LiDAR module 1000b may be disposed to be spaced apart in the second direction extending from the front side toward the rear side of the vehicle C, and the third LiDAR module 1000c and the fourth LiDAR module 1000d may be disposed to be spaced apart in the third direction extending from one lateral side toward another lateral side of the vehicle C.

In this case, each of the first LiDAR module 1000a, the second LiDAR module 1000b, the third LiDAR module 1000c, and the fourth LiDAR module 1000d has a second angle A2 corresponding to an FOV of 160 degrees or more, preferably 180 degrees or more, and more preferably 190 degrees or more, and therefore the first LiDAR module 1000a disposed on the front side of the vehicle C may sense a front area of the vehicle C, and the second LiDAR module 1000b may sense a rear area of the vehicle C.

In addition, the third LiDAR module 1000c and the fourth LiDAR module 1000d may sense a lateral side of the vehicle C.

Compared with the related art, when a virtual region is formed by connecting FOVs of respective LiDAR modules 1000 with lines in FIG. 2A, there is a disadvantage that a region that is not reached by the FOVs of LiDAR modules 1000 is not formed close to the vehicle C, and a blind spot area is formed up to a portion somewhat distant from the vehicle C.

However, when the first LiDAR module 1000a, the second LiDAR module 1000b, the third LiDAR module 1000c, and the fourth LiDAR module 1000d have identical FOVs, that is, FOVs of 180 degrees or more as illustrated in FIG. 2B, a virtual region formed by connecting FOVs of the first LiDAR module 1000a to the fourth LiDAR module 1000d may be a region adjacent to the vehicle C, and thus there is an advantage that a blind spot area may be significantly reduced compared with the related art as long as the virtual region is not positioned in extremely close proximity to the vehicle C.

Referring to FIG. 3 for a more detailed description, as illustrated in FIG. 3, the first LiDAR module 1000a may include a first light emitting unit 100a and a first light receiving unit 200a, and the second LiDAR module 1000b may include a second light emitting unit 100b and a second light receiving unit 200b.

Here, the first light emitting unit 100a and the second light emitting unit 100b at least partially overlap each other in the second direction, and the first light receiving unit 200a and the second light receiving unit 200b may at least partially overlap each other in the second direction.

In addition, the first light emitting unit 100a and the first light receiving unit 200a overlap in the first direction, the second light emitting unit 100b and the second light receiving unit 200b also overlap in the first direction, the first light emitting unit 100a and the first light receiving unit 200a are disposed to be spaced apart in the first direction, and the second light emitting unit 100b and the second light receiving unit 200b are also disposed to be spaced apart in the first direction.

Since such an arrangement causes a ratio between the light emitting unit 100 and the light receiving unit 200 to differ in the LiDAR module 1000 according to the related art, light reflected from an object may not be properly received, or a difference in the amount of light incident on any one of a plurality of channels may be large between the peripheral portion and the central portion of the channel, resulting in a problem in that the performance of the LiDAR module 1000 is significantly degraded.

However, the LiDAR module 1000 according to the embodiment of the present invention has a ratio between a length of the light emitting unit 100 in the first direction and a length of the light emitting unit 100 in the second direction that is identical or similar to a ratio between a length of the light receiving unit 200 in the first direction and a length of the light receiving unit 200 in the second direction, so that a difference in the amount of light between a peripheral portion of a channel and a central portion of a channel may be significantly reduced, thereby providing an advantage of improving the performance of the LiDAR module 1000.

Referring to FIG. 4, as illustrated in FIG. 4, the third LiDAR module 1000c may include a third light emitting unit 100c and a third light receiving unit 200c, and the fourth LiDAR module 1000d may include a fourth light emitting unit 100d and a fourth light receiving unit 200d.

Here, the third light emitting unit 100c and the fourth light emitting unit 100d at least partially overlap each other in the third direction, and the third light receiving unit 200c and the fourth light receiving unit 200d may at least partially overlap each other in the third direction.

In addition, the third light emitting unit 100c and the third light receiving unit 200c overlap in the first direction, the fourth light emitting unit 100d and the fourth light receiving unit 200d also overlap in the first direction, the third light emitting unit 100c and the third light receiving unit 200c are disposed to be spaced apart in the first direction, and the fourth light emitting unit 100d and the fourth light receiving unit 200d are also disposed to be spaced apart in the first direction.

Due to such an arrangement, the LiDAR module 1000 according to the embodiment of the present invention has the ratio between the length of the light emitting unit 100 in the first direction and the length of the light emitting unit 100 in the second direction that is identical or similar to the ratio between the length of the light receiving unit 200 in the first direction and the length of the light receiving unit 200 in the second direction, so that the difference in the amount of light between the peripheral portion of the channel and the central portion of the channel may be significantly reduced, thereby providing the advantage of improving the performance of the LiDAR module 1000.

In the LiDAR module 1000 according to the related art, a phenomenon in which the ratio of the amounts of light of the peripheral portion of the channel and of the central portion of the channel may decrease as the FOV increases may occur.

In order to describe such a phenomenon, reference may be made to Table 1 below and FIG. 5.

**[Table 1]**

| Item | 120×30 | | 190×45 | |
|---|---|---|---|---|
| | center | edge | center | edge |
| Recognition distance (m) | 70 | 30 | 19.7 | 4.6 |
| Relative illumination | 1 | 0.9 | 1 | 0.55 |
| F-number | 0.8 | | 1.1 | |

First, referring to Table 1, the recognition distance (calculated distance) corresponds to an average distance at which an object may be recognized, and when an FOV is 120×30, the central portion may recognize a distance of 70 m, and the peripheral portion (edge) may recognize a distance of 30 m. However, in the case of the LiDAR module 1000 having an FOV of 190×45 according to the embodiment of the present invention, the central portion may recognize a distance of about 19.7 m, and the peripheral portion may recognize a distance of 4.6 m.

Although the recognition distance is expressed here in units of meters (m), for a more accurate comparison, a performance comparison may also be made using the ratio between the central portions, and the comparison may not necessarily be limited only to the above-described comparison methods. In addition, although exact data values are mentioned, it may be desirable to interpret the data values as having an error range of 5% due to various errors during a measurement process. That is, the data values may not necessarily be limited only to the presented numerical values.

As described above, the LiDAR module 1000 according to the embodiment of the present invention has a lower recognition distance than the conventional LiDAR module 1000, but since this is caused by the angle of incidence of light when the FOV is 180 degrees or more, preferably close to 190 degrees, the shorter recognition distance is inevitable due to the wide FOV characteristic.

Nevertheless, in the LiDAR module 1000 having the FOV of 190×45 according to the embodiment of the present invention, when the amount of light at the central portion is assumed to be 1, the amount of light at the peripheral portion is 0.55 times the amount of light at the central portion, and in the case of 120×30, when the amount of light at the central portion is assumed to be 1, the amount of light at the peripheral portion may be 0.9 times the amount of light at the central portion.

In addition, the LiDAR module 1000 according to the related art having the FOV of 120×30 has an F-number of 0.8, and the LiDAR module 1000 according to the embodiment of the present invention having the FOV of 190×45 may have an F-number of 1.1.

Based on the foregoing, it can be confirmed that, in the case of the FOV of 190×45, the recognition distance and the relative illumination are lower than those in the case of 120×30, but when it is confirmed that the relative illumination is not 0% in an FOV exceeding 180 degrees, a remarkable difference can be confirmed as compared with the case of the FOV of 120×30.

Specifically, when the FOV is 180 degrees or more, light incident from a lateral side generally may not be diffracted inward, such that the relative illumination converges to 0%, and this convergence may be physically and obviously predicted in view of the fact that 120×30 has a general FOV within 180 degrees. However, the LiDAR module 1000 according to the embodiment of the present invention has a relative illumination of 50% or more at an FOV of 180 degrees or more, and this can be confirmed through FIG. 5.

Here, a Y-axis of FIG. 5 corresponds to the relative illumination (%), and an X-axis may correspond to an angle corresponding to half of the FOV. Specifically, deg on the X-axis corresponds to an angle from the axis to a limit of the FOV, and twice deg may be interpreted as corresponding to the FOV.

Based thereon, in general, in an FOV of 180 degrees or more, the relative illumination should be derived to be considerably low or close to 0%, but it can be confirmed that the LiDAR module 1000 according to the embodiment of the present invention has a relative illumination of 70% to 50% when deg is 90 degrees or more, that is, when the FOV is 180 degrees or more, and has an FOV of about 55% based on the FOV of 190 degrees. Here, the about 55% based on the FOV of 190 degrees may preferably be interpreted as falling within a range of 58% to 52%.

Meanwhile, as described above, since it is generally somewhat difficult to form an FOV of 180 degrees or more, the first optical system may have an arrangement as illustrated in FIG. 6. Here, the first optical system includes a plurality of lenses, does not include a diffuser that diffuses light, and may include at least one aspherical lens.

In a first lens 101 adjacent to an object, an object-side surface facing the object may be convex, and an inner surface facing the light source 110 may be concave. In addition, in a second lens 102 disposed adjacent to the first lens 101, an object-side surface may also be convex and an inner surface facing the light source 110 may be concave.

In addition, in a third lens 103 adjacent to the second lens 102, an object-side surface may be concave, and an inner surface facing the light source 110 may also be concave. In a fourth lens 104 adjacent to the third lens 103, an object-side surface may be concave, and an inner surface facing the light source 110 may be convex.

In addition, in a fifth lens 105 adjacent to the fourth lens 104, an object-side surface may be convex, and an inner surface facing the light source 110 may also be convex. In addition, in a sixth lens 106 adjacent to the fifth lens 105 may, an object-side surface may be convex, and an inner surface facing the light source 110 may also be convex. In addition, a seventh lens 107 adjacent to the sixth lens 106 and adjacent to the light source 110 may be a microlens array. That is, the microlens array may be disposed between the sixth lens 106 and the light source 110 on an optical path.

As described above, through the arrangement of the first lens 101 to the seventh lens 107, the FOV of the LiDAR module 1000 may be implemented to be 180 degrees or more, and this is one embodiment for implementing an FOV of 180 degrees or more, and may not necessarily be limited only to the above-mentioned arrangement, shape, and configuration.

In addition, at least some of a lens arrangement of the first optical system and a lens arrangement of the second optical system may be the same. For example, in the first optical system, the first lens 101 to the seventh lens 107 as illustrated in FIG. 6 may be arranged on an optical axis, and, in the arrangement of the second optical system, the first lens 101 to the seventh lens 107 may also be arranged on an optical axis in the same manner as in the first optical system. Alternatively, in the second optical system, any one of the first lens 101 to the seventh lens 107 may have a different arrangement.

Although only the lens arrangements of the first optical system and the second optical system have been described here, both the first optical system and the second optical system may have an array and arrangement of lenses having the same characteristics, such as shapes and focal lengths of the first lens 101 to the seventh lens 107. If necessary, according to a design, some of the lenses may have different arrangements and properties, and the arrangement may not necessarily be limited only to those described above.

In addition, the F-number of the first optical system and the F-number of the second optical system may be designed to be different from each other. Since the first optical system of the light emitting unit 100 does not require an F-number as low as that of the second optical system of the light receiving unit 200, the F-number of the first optical system may be greater than the F-number of the second optical system.

The exemplary embodiments according to the present invention have been examined, and the fact that the present invention can be embodied in other specific forms in addition to the embodiments described above without departing from the spirit or scope of the present invention is obvious to those skilled in the art.

Therefore, the above-described embodiments are to be regarded as illustrative and not restrictive, and accordingly, the present invention is not limited to the above description but may be modified within the scope of the appended claims and their equivalents.

## Claims

1. A LiDAR module comprising:
a light emitting unit configured to emit light; and
a light receiving unit configured to receive the light reflected from an object,
wherein the light emitting unit includes a first short axis parallel to a first direction and a second long axis parallel to a second direction,
the light receiving unit includes a second short axis parallel to the first direction and a second long axis parallel to the second direction,
the light emitting unit includes a plurality of light sources arranged in the first direction,
the light receiving unit includes a plurality of channels arranged in the first direction, and
the first direction and the second direction are perpendicular to each other.

2. The LiDAR module of claim 1, wherein the light emitting unit and the light receiving unit are spaced apart from each other to be aligned in the first direction.

3. The LiDAR module of claim 1, wherein a length of the light emitting unit in the second direction is 3 to 5 times a length of the light emitting unit in the first direction.

4. The LiDAR module of claim 1, wherein a length of the light receiving unit in the second direction is 3 to 5 times a length of the light receiving unit in the first direction.

5. The LiDAR module of claim 1, wherein the light emitting unit includes a first optical system formed by a plurality of lenses,
the light receiving unit includes a second optical system formed by a plurality of lenses, and
arrangements of the plurality of lenses of the first optical system and the second optical system are at least partially identical.

6. The LiDAR module of claim 5, wherein the first optical system does not include a diffuser configured to diffuse the light.

7. The LiDAR module of claim 1, wherein a field of view of the light emitting unit is 160 degrees or more, and
a relative illumination of the light receiving unit is 0.5 or more.

8. A LiDAR device comprising:
a first LiDAR module;
a second LiDAR module;
a third LiDAR module; and
a fourth LiDAR module,
wherein each of the first LiDAR module, the second LiDAR module, the third LiDAR module, and the fourth LiDAR module includes a light emitting unit and a light receiving unit,
the light emitting unit includes a first short axis parallel to a first direction and a second long axis parallel to a second direction,
the light receiving unit includes a second short axis parallel to the first direction and a second long axis parallel to the second direction,
the light emitting unit includes a plurality of light sources arranged in the first direction,
the light receiving unit includes a plurality of channels arranged in the first direction, and
the first direction and the second direction are perpendicular to each other.

9. The LiDAR device of claim 8, wherein the light emitting unit of the first LiDAR module and the light emitting unit of the second LiDAR module overlap in the second direction, and
the light emitting unit of the third LiDAR module and the light emitting unit of the fourth LiDAR module overlap in a third direction perpendicular to the first direction and the second direction.

10. The LiDAR device of claim 8, wherein the light receiving unit of the first LiDAR module and the light receiving unit of the second LiDAR module overlap in the second direction, and
the light receiving unit of the third LiDAR module and the light receiving unit of the fourth LiDAR module overlap in a third direction perpendicular to the first direction and the second direction.
